# EUROPEAN PATENT APPLICATION

(11) **EP 2 602 705 A1**
(43) Date of publication of application: **12.06.2013**
(21) Application number: 12194735.2
(22) Date of filing: 29.11.2012
(51) Int. Cl.: G06F 3/0488

(54) **Electronic device and method for controlling the same**

(30) Priority: 08.12.2011 TW 100145300
(71) Applicant: Acer Incorporated, Taipei Hsien 221 (TW)
(72) Inventor: LIN, Chun-Cai, 221 Hsichih, Taipei Hsien (TW)
(74) Representative: 2K Patentanwälte Blasberg Kewitz & Reichel

(57) **Abstract**

Electronic device and method for controlling the same are provided. The electronic device comprises a touch-sensitive screen, a storage device, and a controller. The storage device stores personal data. The controller detects contact with the touch-sensitive screen while the electronic device is in a user-interface lock state. When contact with the touch-sensitive screen is detected, the controller determines whether the detected contact corresponds to a predefined limited activation gesture. If the detected contact corresponds to the predefined limited activation gesture, the controller transitions the electronic device from the user-interface lock state to a limited activation state. When the electronic device operates in the limited activation state, the personal data stored in the storage device cannot be accessed.

## Description

### CROSS REFERENCE TO RELATED APPLICATIONS

This application claims priority of Taiwan Patent Application Ser. No. 100145300, filed 2011/12/08, entitled ELECTRONIC DEVICE AND METHOD FOR CONTROLLING THE SAME. The contents of this application are hereby incorporated by reference.

### BACKGROUND OF THE INVENTION

### Field of the Invention

The disclosure relates generally to an electronic device and method of controlling the same and, more particularly, to unlocking of user interfaces on portable electronic devices by inputting preset gestures.

### Description of the Related Art

Recently, electronic devices, such as handheld devices, have become more and more technically advanced and multifunctional. Due to increased convenience and functions of the devices, these devices have become necessities of life. Using the electronic devices, users can make phone calls, as well as conduct social interactions and business transactions. As a result, importance and variety of log files and personal data stored in these handheld devices have increased.

Touch screens are becoming more popular for use both as displays and as user input devices, especially for portable devices. Users may interact with the device through the touch screens. Such devices lock the touch screen after a certain period of idleness. Users have to unlock the device before they use the device.

Devices may be unlocked by any of several well-known unlocking procedures, such as entering a password or conducting gestures (such as sliding or button gestures, or combinations thereof) on the touch screen following a prompt which is displayed on the touch screen. A function can be activated only after the unlocking procedure has been performed and the device has been switched to an unlocked state. For these unlocking procedures, password memorization can be burdensome and the button combinations may be hard to perform. As a consequence, these drawbacks may reduce the ease of using such devices.

As described, various personal data is stored in the handheld devices. Therefore, if one user allows another user to use his or her handheld device, personal data may be accessed by the other user. This leads to inconvenience and risks for users.

Accordingly, there is a need for more user-friendly procedures for unlocking handheld devices and a method enabling users to directly activate applications of handheld devices under a locked state. There is also a need for methods and devices that can protect the personal data of users when a handheld device is lent to someone else.

### BRIEF SUMMARY OF THE INVENTION

A method of controlling an electronic device with a touch-sensitive screen and an electronic device are provided.

An embodiment of an electronic device includes a touch-sensitive screen, a storage device, and a controller. The storage device stores personal data. The controller detects a contact with the touch-sensitive screen when the electronic device is in a user-interface lock state. The controller, in response to a detected contact with the touch-sensitive screen, determines whether the detected contact conforms to a predefined limited activation gesture. If the detected contact conforms to a predefined limited activation gesture, the controller transitions the electronic device from the user-interface lock state into a limited activation state, wherein personal data stored in the storage device is protected from being accessed under the limited activation state.

According to an embodiment, when the detected contact conforms to the predefined limited activation gesture, the controller controls the electronic device to execute an application program corresponding to the limited activation gesture. During the execution of the application program, the personal data stored in the storage device is protected from being accessed under the limited activation state. The limited activation gesture can be a user-defined gesture, or a manufacturer-defined gesture, and is editable by an authorized user of the electronic device.

According to an embodiment, the controller further transitions the electronic device from the limited activation state to the user-interface lock state, when a predetermined time of idleness has elapsed after the electronic device was transitioned from the user-interface lock state into the limited activation state.

In an embodiment of a method for controlling an electronic device with a touch-sensitive screen, when the electronic device is in a user-interface lock state, contact with the touch-sensitive screen is detected. In response to a detected contact with the touch-sensitive screen, it is determined whether the detected contact conforms to a predefined limited activation gesture. If the detected contact conforms to a predefined limited activation gesture, the electronic device is transitioned from the user-interface lock state into a limited activation state, wherein personal data stored in the electronic device is protected from being accessed under the limited activation state.

A method of controlling an electronic device with a touch-sensitive screen, and related operating systems may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an electronic device of the invention;

Fig. 2 is a flowchart of an embodiment of a method of controlling an electronic device with a touch-sensitive screen;

Fig. 3A illustrates a graphical user interface display of an electronic device according to embodiments of the invention;

Fig. 3B illustrates a graphical user interface display of an electronic device according to embodiments of the invention;

Fig. 3C illustrates a graphical user interface display of an electronic device according to embodiments of the invention;

Fig. 3D illustrates a graphical user interface display of an electronic device according to embodiments of the invention; and

Fig. 3E illustrates a graphical user interface display of an electronic device according to embodiments of the invention.

### DETAILED DESCRIPTION OF THE INVENTION

A method of controlling an electronic device with a touch-sensitive screen and an electronic device are provided.

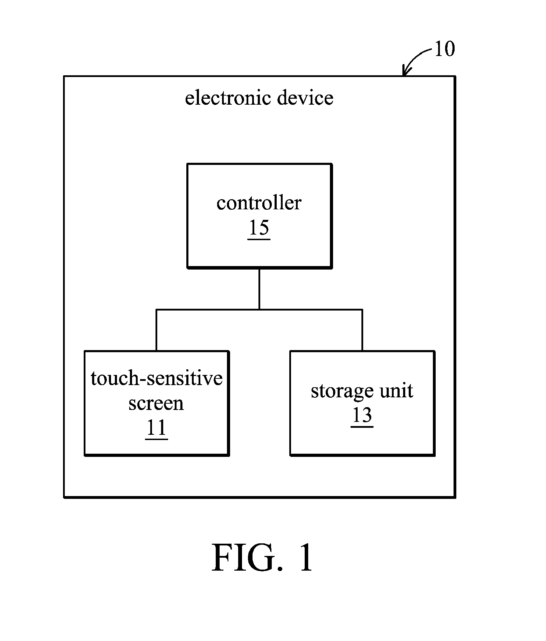

Fig. 1 is a schematic diagram illustrating an embodiment of an electronic device of the invention. According to an embodiment, an electronic device 10 can be a personal computer or portable electronic device, such as a PDA (Personal Digital Assistant), a mobile phone, a smart phone, or a mobile Internet Device (MID).

The electronic device 10 comprises a touch-sensitive screen 11, a storage unit 13, and a controller 15.

The touch-sensitive screen 11 has a touch-sensitive surface. The touch-sensitive screen 11 can detect contact and movement of an input tool, such as a stylus or finger on the touch-sensitive surface. The touch-sensitive screen 11 can display related graphics, data, and interfaces. The touch-sensitive screen 11 receives inputs corresponding to user manipulation, and transmits the received inputs to the controller 15 for further processing.

The storage unit 13 stores personal data, settings and software of the electronic device 10. The personal data can be various user data or personal files such as an address book, call list, received/sent messages, and internet cookies.

The controller 15 executes a method of controlling an electronic device with a touch-sensitive screen of the invention. Related details are discussed later.

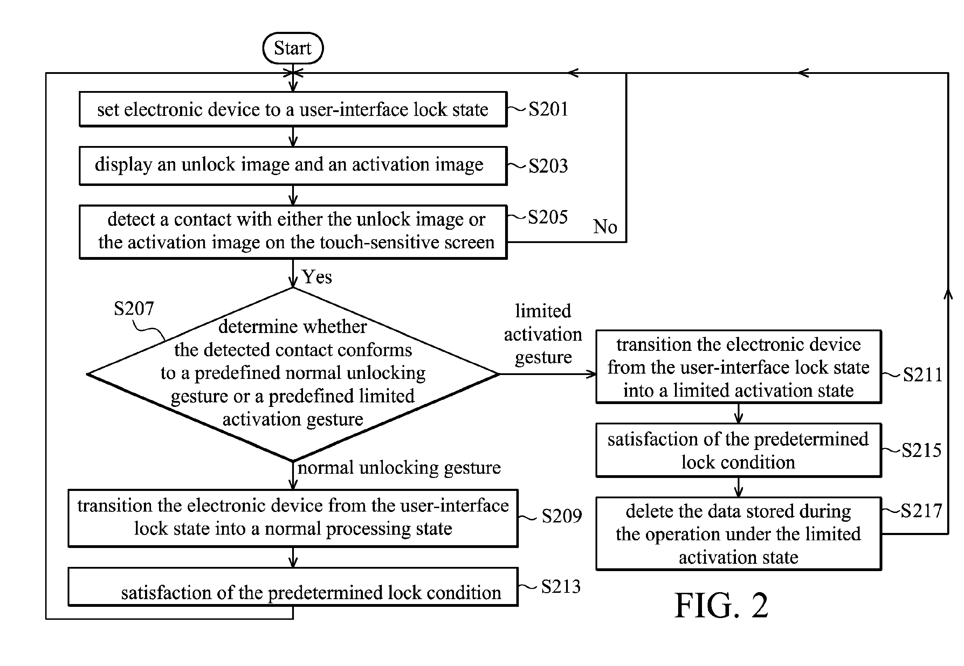

Fig. 2 is a flowchart of an embodiment of a method of controlling an electronic device with a touch-sensitive screen. The method of controlling the electronic device with a touch-sensitive screen can be used in an electronic device, including, but not limited to, a PDA (Personal Digital Assistant), a smart phone, a mobile phone, or the like. According to an embodiment, the electronic device is equipped with a touch-sensitive screen.

While the process flow described below includes a number of operations that appear to occur in a specific order, it should be apparent that these processes may include more or fewer operations, which may be executed serially or in parallel (for example, using parallel processors or a multi-threading environment).

In step S201, the electronic device 10 is set to a user-interface lock state.

In step S203, when the electronic device is in the user-interface lock state, an unlock image and an activation image are presented on the touch-sensitive screen when a particular event occurs, such as user contact with the touch-sensitive screen.

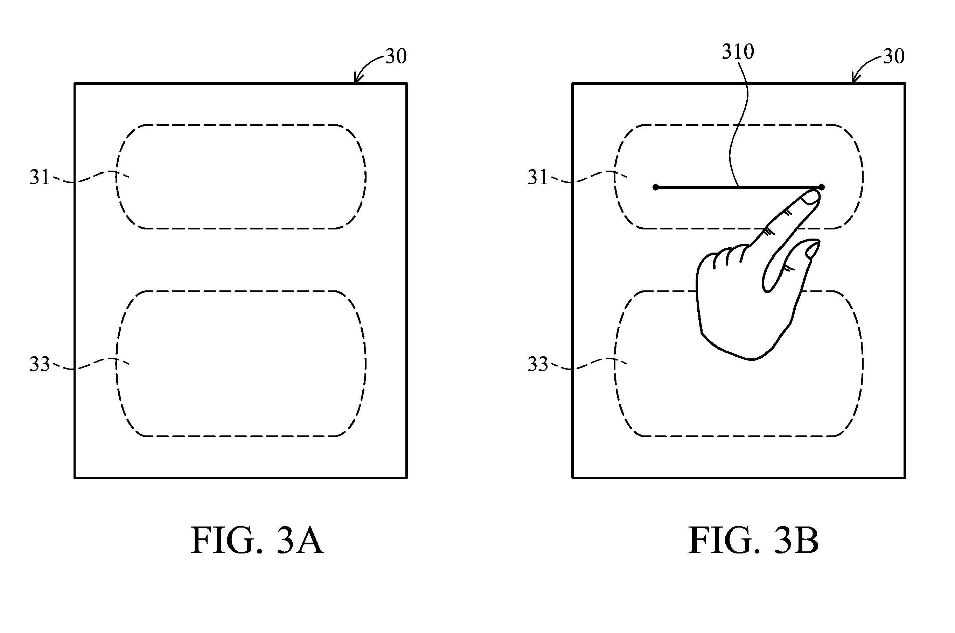

Referring to Fig. 3A, a graphical user interface display is shown. As shown in Fig. 3A, when the electronic device is in the user-interface lock state, an unlock image 31 and activation image 33 are displayed on a screen 30 of the touch-sensitive screen when a particular event occurs, such as user contact with the touch-sensitive screen. According to an embodiment, the area occupied by the unlock image 31 is configured to receive user inputs for unlocking the electronic device from the user-interface lock state (the user input is hereinafter referred to as a normal unlocking gesture),and the area occupied by the activation image 33 is configured to receive user inputs for activating particular application program(s) corresponding to the user input (the user input is hereinafter referred to as a normal unlocking gesture). As used herein, a gesture is a motion of the object/appendage making contact with the touch-sensitive screen. It should be apparent that the invention is not limited to this example, and the unlock image 31 and the activation image 33 can be displayed in any design.

In step S205, it is determined whether a contact with either the unlock image 31 or the activation image 33 on the touch-sensitive screen is detected. If a contact is detected, the process proceeds to step S207, otherwise the process returns to step S201, setting the electronic device to the user-interface lock state.

In step S207, it is determined whether the detected contact is located on the unlock image 31 and conforms to a predefined normal unlocking gesture, and whether the detected contact is located on the activation image 33 and conforms to a predefined limited activation gesture. The limited activation gestures predefined for the activation image 33 comprise various gestures, wherein each gesture corresponds to a particular application program.

When the detected contact is located on the unlock image 31 and conforms to a predefined normal unlocking gesture, the method proceeds to step S209, and when the detected contact is located on the activation image 33 and conforms to a predefined limited activation gesture, the method proceeds to step S211.

In step S209, if the detected contact on the unlock image 31 conforms to a predefined normal unlocking gesture, the electronic device is transitioned from the user-interface lock state into a normal processing state. Under the normal processing state, all functions equipped with the electronic device can be activated, and personal data stored in the electronic device is accessible under the limited activation state.

In step S211, if the detected contact on the activation image 33 conforms to a predefined limited activation gesture, the electronic device is transitioned from the user-interface lock state into a limited activation state, and the electronic device executes an application program corresponding to the limited activation gesture under the limited activation state. During the execution of the application program, the personal data stored in the electronic device is protected from being accessed under the limited activation state. The limited activation gesture can be a user-defined gesture. The limited activation gesture can be a manufacturer-defined gesture, which is editable by an authorized user of the electronic device.

Fig. 3B shows an exemplary normal unlocking gesture on the unlock image 31 according to this embodiment. As shown in Fig. 3B, the normal unlocking gesture 310 may include a contact of the touch-sensitive screen on the left edge of the unlock image 31 (to initiate the gesture), a horizontal movement of the point of contact to the opposite edge while maintaining continuous contact with the touch-sensitive screen, and a breaking of the contact at the opposite edge (to complete the gesture). It should be appreciated that the normal unlocking gesture is not limited to the one illustrated in Fig. 3B.

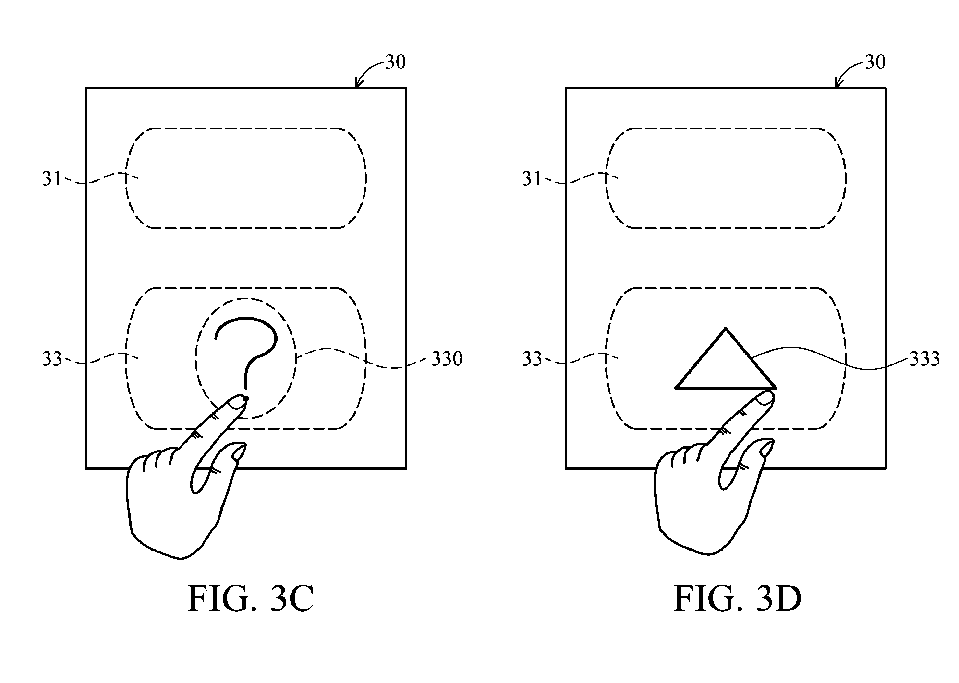

Fig. 3C shows an exemplary limited activation gesture on the activation image 33 according to this embodiment. As shown in Fig. 3C, the limited activation gesture may include a continuous movement of the point of contact that forms a question-mark-shaped path 330 on the activation image 33. When the question-mark-shaped path 330 is detected on the activation image 33, the electronic device is transitioned from the user-interface lock state into a limited activation state, and the electronic device performs a particular application program (for example, a searching engine program) corresponding to the limited activation gesture. Accordingly, upon the limited activation gesture, the electronic device activates browser software and presents a web page of a search engine directly from the user-interface lock state. Under the limited activation state, personal data stored in the electronic device is protected from being accessed by any activated program. For example, in step S211, activated search engine program cannot access records of keywords that have been used by the search engine program, and the activated browser software cannot access the 'my favorite' list stored in the electronic device.

Fig. 3D shows another exemplary limited activation gesture on the activation image 33. As shown in Fig. 3D, the limited activation gesture may include a continuous movement of the point of contact that forms a triangle-shaped path 333 on the activation image 33. When the triangle-shaped path 333 is detected on the activation image 33, the electronic device is transitioned from the user-interface lock state into a limited activation state, and the electronic device performs a calendar program corresponding to the limited activation gesture. Accordingly, upon the limited activation gesture, the electronic device activates calendar program directly from the user-interface lock state. Under the limited activation state, personal data stored in the electronic device is protected from being accessed by any activated program. For example, in step S211, the activated calendar program presents a blank calendar, without accessing any personal data stored in the electronic device.

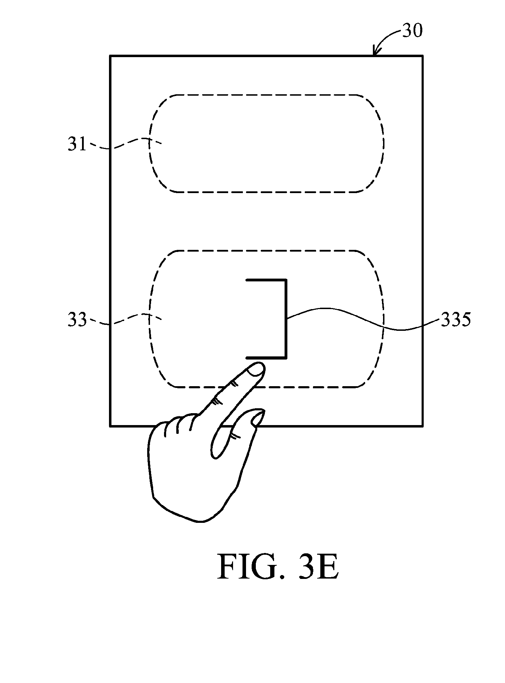

Fig. 3E shows another exemplary limited activation gesture on the activation image 33. As shown in Fig. 3E, the limited activation gesture may include a continuous movement of the point of contact that forms a bracket "]" -shaped path 335 on the activation image 33. When the "] " -shaped path 335 is detected on the activation image 33, the electronic device is transitioned from the user-interface lock state into a limited activation state, and the electronic device activates a calling function corresponding to the limited activation gesture. Accordingly, when the limited activation gesture is received, the electronic device activates the calling function directly from the user-interface lock state. Under the limited activation state, personal data stored in the electronic device is protected from being accessed by any activated program. For example, in step S211, the activated calling function cannot access any personal data stored in the electronic device, such as call records and contact lists.

The limited activation gestures shown in Figs. 3C∼3E are simply examples, which are not intended to limit the invention to the precise forms disclosed. The limited activation gestures can be of any design to meet requirements.

In step S213, upon satisfaction of the predetermined lock condition under the limited activation state, the method proceeds to step S201, to transition the electronic device from the limited activation state to the user-interface lock state. For example, the predetermined lock condition can be manual locking by a user, an exit command by a user, or the elapse of a predetermined time of idleness.

In step S215, upon satisfaction of the predetermined lock condition under the limited activation state, the method proceeds to step S217. For example, the predetermined lock condition can be manual locking by a user, an exit command by a user, or the elapse of a predetermined time of idleness.

In step S217, the data stored during the operation under the limited activation state is deleted when the electronic device is transitioned to the user-interface lock state. For example, the deletion can be operated on key words used for a search engine under the limited activation state, messages sent under the limited activation state, or phone numbers called under the limited activation state.

After the data is deleted in step S217, step S201 is performed, transitioning the electronic device from the limited activation state to the user-interface lock state

In the foregoing description, for explanation purposes, reference to specific embodiments has been used. However, the descriptions above are not intended to be exhaustive or to limit the invention to the precise forms disclosed.

Methods of controlling an electronic device, and related operating systems, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method for controlling an electronic device with a touch-sensitive screen, comprising:
while the electronic device is in a user-interface lock state, detecting a contact with the touch-sensitive screen (S205);
in response to a detected contact with the touch-sensitive screen, determining whether the detected contact conforms to a predefined limited activation gesture (S207);
if the detected contact conforms to a predefined limited activation gesture, transitioning the electronic device from the user-interface lock state into a limited activation state, wherein personal data stored in the electronic device is protected from being accessed under the limited activation state (S211).

2. The method of claim 1, when the detected contact conforms to the predefined limited activation gesture, further controlling the electronic device to execute an application program corresponding to the limited activation gesture, wherein, during the execution of the application program, the personal data stored in the electronic device is protected from being accessed under the limited activation state.

3. The method of claim 1 or 2, further receiving a user-defined gesture as the limited activation gesture.

4. The method of any of the claims 1 to 3, wherein the limited activation gesture is manufacturer-defined.

5. The method of claim 4, wherein the limited activation gesture is a manufacturer-defined gesture, which is editable by an authorized user of the electronic device.

6. The method of any of the claims 1 to 5, further transitioning the electronic device from the limited activation state to the user-interface lock state, when a predetermined time of idleness has elapsed after the electronic device was transitioned from the user-interface lock state into the limited activation state.

7. The method of claim 6, further deleting data stored during the operation under the limited activation state upon transitioning the electronic device to the user-interface lock state.

8. The method of any of the claims 1 to 7, further transitioning the electronic device from the limited activation state to the user-interface lock state, upon receiving an exit command under the limited activation state.

9. The method of claim 8, further deleting data stored during the operation under the limited activation state upon transitioning the electronic device to the user-interface lock state.

10. The method of any of the claims 1 to 9, further comprising:
in response to the detected contact with the touch-sensitive screen, determining whether the detected contact conforms to a predefined normal unlocking gesture, wherein the predefined normal unlocking gesture is different from the predefined limited activation gesture; and if th
e detected contact conforms to the predefined normal unlocking gesture, transitioning the electronic device from the user-interface lock state into a normal processing state, wherein personal data stored in the electronic device is accessible under the normal processing state.

11. An electronic device (10), comprising:
a touch-sensitive screen (11), displaying images and receiving touch inputs;
a storage device (13), storing personal data;
a controller (15), arranging for detecting a contact with the touch-sensitive screen while the electronic device is in a user-interface lock state;
wherein the controller, in response to a detected contact with the touch-sensitive screen, is arranged for determining whether the detected contact conforms to a predefined limited activation gesture;
if the detected contact conforms to a predefined limited activation gesture, the controller is arranged for transitioning the electronic device from the user-interface lock state into a limited activation state, wherein personal data stored in the storage device is protected from being accessed under the limited activation state.

12. The electronic device of claim 11, when the detected contact conforms to the predefined limited activation gesture, further comprising the controller being arranged to control the electronic device to execute an application program corresponding to the limited activation gesture, wherein, during the execution of the application program, the personal data stored in the storage device is protected from being accessed under the limited activation state.

13. The electronic device of claim 11 or 12, wherein the controller is arranged for further transitioning the electronic device from the limited activation state to the user-interface lock state, when a predetermined time of idleness has elapsed after the electronic device was transitioned from the user-interface lock state into the limited activation state;wherein the controller is arranged for further deleting data stored during the operation under the limited activation state upon transitioning the electronic device to the user-interface lock state.

14. The electronic device of any of the claims 11 to 13, the controller is arranged for further transitioning the electronic device from the limited activation state to the user-interface lock state, upon satisfaction of predetermined lock condition under the limited activation state; wherein the controller is arranged for further deleting data stored during the operation under the limited activation state upon transitioning the electronic device to the user-interface lock state.

15. The electronic device of any of the claims 11 to 14, wherein the controller is arranged for:
in response to the detected contact with the touch-sensitive screen, determining whether the detected contact conforms to a predefined normal unlocking gesture, wherein the predefined normal unlocking gesture is different from the predefined limited activation gesture; and if th
e detected contact conforms to the predefined normal unlocking gesture, transitioning the electronic device from the user-interface lock state into a normal processing state, wherein personal data stored in the electronic device is accessible under the normal processing state.
